Europäisches Patentamt

European Patent Office

Office européen des brevets

(11) Veröffentlichungsnummer: **0 241 683 B1**

## EUROPÄISCHE PATENTSCHRIFT

(45) Veröffentlichungstag der Patentschrift: **02.12.92**

(21) Anmeldenummer: **87102761.1**

(22) Anmeldetag: **26.02.87**

(51) Int. Cl.5: **H04N 5/445**, H04N 5/278, G10L 5/02

(54) Einrichtung zur Untertitelung von Fernsehsignalen.

(30) Priorität: **12.04.86 DE 3612360**

(43) Veröffentlichungstag der Anmeldung:
**21.10.87 Patentblatt 87/43**

(45) Bekanntmachung des Hinweises auf die Patenterteilung:
**02.12.92 Patentblatt 92/49**

(84) Benannte Vertragsstaaten:
**CH DE FR GB IT LI**

(56) Entgegenhaltungen:
GB-A- 1 370 535
GB-A- 2 020 467

FERNMELDE-PRAXIS, Band 58, Nr. 9, 1981, Seiten 330-334; F. JELINECK : "Fortschritt in machineller Spracherkennung bei IBM".

(73) Patentinhaber: **GRUNDIG E.M.V. Elektro-Mechanische Versuchsanstalt Max Grundig holländ. Stiftung & Co. KG.
Kurgartenstrasse 37
W-8510 Fürth/Bay.(DE)**

(72) Erfinder: **König, Wolfgang, Dipl.-Ing.
Grundig E.M.V. Kurgartenstrasse 37
W-8510 Fürth/Bay(DE)**

## Beschreibung

Die vorliegende Erfindung betrifft Fernsehempfänger mit den im Oberbegriff der Ansprüche 1 und 2 angegebenen Merkmalen.

Es ist bereits bekannt, auf dem Bildschirm eines Fernsehempfängers Informationen für den Zuschauer in Schriftform darzustellen. Diese Art der Informations-Darbietung wird beispielsweise verwendet, wenn Fernsehfilme in ihrer Originalfassung gezeigt werden, wobei die die Bildszenen begleitende Sprachinformation in einer dem Zuschauer nicht geläufigen Fremdsprache angeboten wird. Bei derartigen Filmen erfolgt des öfteren eine Untertitelung der Bildszenen, bei der die die Bildszenen begleitende Sprachinformation in der Muttersprache des Zuschauers in der Nähe des unteren Bildschirmrandes eingeblendet wird. Diese Art der Informationsdarbietung ist insbesondere auch für Gehörgeschädigte von Bedeutung, die eine akustische Sprachwiedergabe nicht verstehen können.

Weiterhin ist beispielsweise aus der GB-A-1 370 535 bereits eine Übertragung von Videotextsignalen bekannt. Solche Videotextsignale werden zusätzlich zu dem eigentlichen Fernsehbild in digitaler Form während der Vertikalaustastlücken des Bildsignales gesendet. Ein Videotextsignal kann entweder im Zusammenhang mit dem während der aktiven Zeilenzeit übertragenem Bildinhalt stehen, wenn beispielsweise bei Sportsendungen der Kommentar für Schwerhörige zusätzlich als Videotextsignal übertragen wird, oder auch unabhängig vom eigentlichen Bildinhalt sein. Das Videotextsignal kann ferner sowohl anstelle des eigentlichen Bildinhaltes als auch zusätzlich zu diesem auf dem Bildschirm des Fernsehempfängers abgebildet werden. Zur Auswertung eines Videotextsignals wird ein mit dem Fernsehempfänger verbundener Videotextdecoder benötigt, welcher u.a. einen Zeichengenerator aufweist, welcher aus dem Videotextsignal breitbandige RGB-Signale für eine Schriftdarstellung erzeugt.

Ferner ist es aus der Zeitschrift "fernmeldepraxis", Bd. 58/1981, Nr. 9, S. 330 - 334 bereits bekannt, mittels eines Mikrofons aufgenommene Sprachsignale unter Verwendung eines Mikroprozessors zu analysieren und auf dem Bildschirm eines Datensichtgerätes wiederzugeben. Zur Auswertung der Sprachsignale werden diese digitalisiert, zu Blöcken von je 1000 Werten gesammelt und mittels der diskreten Fouriertransformation in spektrale Zeitreihen umgewandelt. Diese spektralen Zeitreihen werden mit vorab abgespeicherten Modellreihen verglichen und im Falle einer Übereinstimmung auf dem Bildschirm des Datensichtgerätes dargestellt.

Aus der GB-A-2 020 467 ist ein Spracherkennungssystem bekannt, welches beispielsweise Schwerhörigen das Telefonieren ermöglichen soll oder welches in einem Diktiergerät zur Umsetzung von Sprache in elektrische Signale dienen soll.

Die Aufgabe der vorliegenden Erfindung besteht darin, einen Fernsehempfänger der im Oberbegriff des Anspruchs 1 bzw. 2 angegebenen Art derart weiterzubilden, daß insbesondere gehörgeschädigten Personen, welche bei Fernsehsendungen die die Bildinformation begleitende Toninformation nicht hören können, das Verständnis dieser Sendung erleichtert wird, ohne daß es senderseitiger Maßnahmen bedarf.

Diese Aufgabe wird durch die in den nebengeordneten Patentansprüchen 1 und 2 angegebenen Merkmale gelöst. Vorteilhafte Weiterbildungen ergeben sich aus den abhängigen Ansprüchen.

Die Vorteile der Erfindung liegen insbesondere darin, daß es keiner senderseitigen Maßnahmen bedarf, um eine Untertitelung von Fernsehsendungen vorzunehmen.

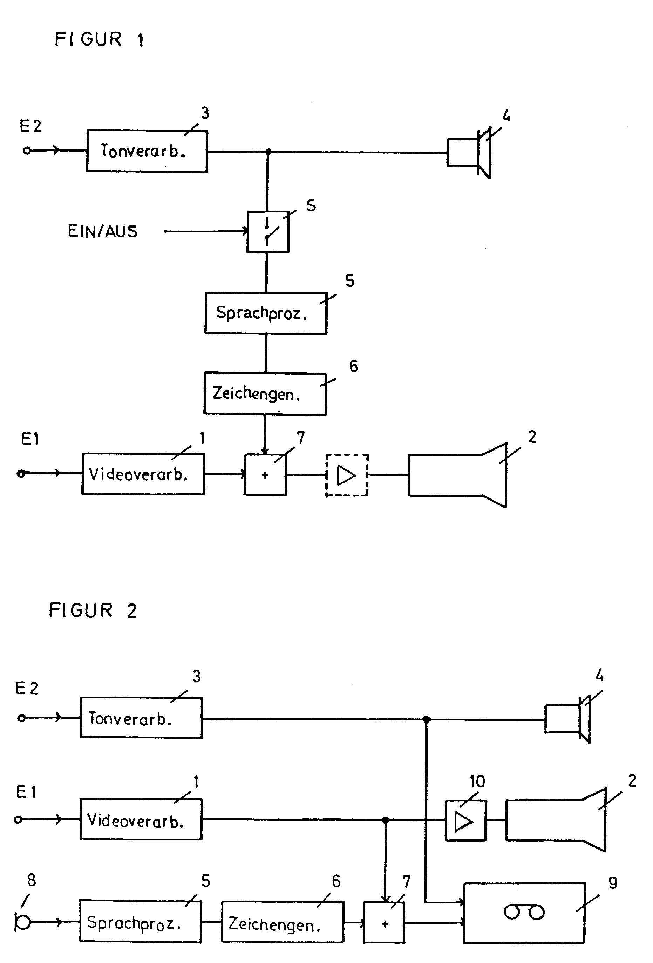

Ferner weist die Einrichtung nach der vorliegenden Erfindung den Vorteil auf, daß sie nur im Bedarfsfall wirksam wird, d. h. nur dann, wenn der Zuschauer auch eine Untertitelung wünscht. Weitere vorteilhafte Eigenschaften ergeben sich aus Ausführungsbeispielen, welche im folgenden anhand der Figuren 1 und 2 näher erläutert werden.

Es zeigt die

Fig. 1      eine Einrichtung nach einem ersten bevorzugten Ausführungsbeispiel für die vorliegende Erfindung, und die

Fig. 2      eine Einrichtung nach einem zweiten bevorzugten Ausführungsbeispiel für die vorliegende Erfindung.

Die in Figur 1 gezeigte Einrichtung besitzt zwei Eingänge $E_1$ und $E_2$. Dem Eingang $E_1$ wird ein Videosignal zugeführt. Dieses Videosignal wird in einer Schaltung 1, bei der es sich beispielsweise um einen Videoverstärker eines herkömmlichen Farb- oder S/W-Fernsehempfängers handeln kann, verarbeitet und an den ersten Eingang eines Addierers 7 weitergeleitet. Das Ausgangssignal des Addierers 7 wird, ggf. über einen Verstärker, einem Display 2, bei dem es sich um den Bildschirm des Fernsehempfängers handeln kann, visuell dargestellt.

Dem Eingang $E_2$ der in Figur 1 gezeigten Einrichtung wird ein Tonsignal zugeführt, welches die den Bildinhalt begleitende Toninformation darstellt. Dieses Tonsignal wird in einer Schaltung 3 verstärkt und über einen Lautsprecher 4 akustisch wiedergegeben.

Ferner wird das Ausgangssignal der Schaltung 3 zur Tonsignalverarbeitung an einen Schalter S angelegt. Dieser Schalter wird beispielsweise durch Betätigung einer am Gehäuse bzw. am Bedienfeld des Fernsehempfängers oder auch auf dem Fernbedienungsgeber angeordneten Taste immer dann durchlässig geschaltet, wenn der Zuschauer eine Untertitelung der momentan empfangenen Bildsendung wünscht. Das Ausgangssignal des Schalters gelangt an einen Sprachprozessor 5, welcher das niederfrequente Tonsignal analysiert. Diese Analyse kann beispielsweise durch einen Vergleich von Abtastwerten des niederfrequenten Tonsignals mit vorher abgespeicherten Signalwerten erfolgen, welche eine Art "Lexikon" darstellen.

Werden im Rahmen dieses Vergleichs Wörter, Satzteile oder Sätze erkannt, können diese mittels eines Zeichengenerators 6 in zur Darstellung auf dem Bildschirm 2 geeignete Form gebracht werden. Diese Ausgangssignale des Zeichengenerators 6 werden an den zweiten Eingang des Addierers 7 angelegt und dort derart in das Videosignal eingetastet, daß sie auf dem Bildschirm als Untertitel zu der momentanen Bildsendung sichtbar werden. Diese Eintastung kann sowohl in der FBAS- als auch in der RGB-Ebene erfolgen.

Ferner können durch den genannten Vergleich auch bestimmte Geräusche erkannt werden, wie z. B. Pistolenschüsse, Klopfzeichen, Donner, Knall, usw. Diesen Geräuschen kann durch eine geeignete Vorprogrammierung des Sprachprozessors 5 bzw. Zeichengenerators 6 ein bestimmter Zeichensatz zugeordnet werden, so daß ein schwerhöriger Zuschauer auch Geräusche, die akustisch für ihn nicht hörbar sind, voneinander unterscheiden kann.

Ferner kann bei der Untertitelung auch dafür gesorgt werden, daß ausschließlich Sprachsignale eingeblendet werden und jedes andere Geräusch unterdrückt wird. Dies ist beispielsweise bei im Fernsehen gezeigten politischen Diskussionen, Interviews, Nachrichtensendungen, etc., von Vorteil, da dort die wesentliche Information in der Sprache liegt und die Wiedergabe von Umgebungsgeräuschen unwesentlich ist und in bestimmten Fällen sogar störend wirken kann.

Die Figur 2 zeigt eine Einrichtung nach einem zweiten bevorzugten Ausführungsbeispiel für die vorliegende Erfindung. Dem Eingang $E_1$ dieser Einrichtung wird ein Videosignal zugeführt. Dieses wird in einer Schaltung 1 zur Videosignalverarbeitung verstärkt und über einen Verstärker 10 dem Bildschirm bzw. Display 2 zur visuellen Darstellung zugeführt.

Dem Eingang $E_2$ der in Figur 2 gezeigten Einrichtung wird ein Tonsignal zugeführt, welches die den Bildinhalt begleitende Toninformation darstellt. Dieses Tonsignal wird in einer Schaltung 3 verstärkt und über einen Lautsprecher 4 akustisch wiedergegeben.

Ferner ist bei dem in der Figur 2 gezeigten Ausführungsbeispiel ein Mikrofon 8 vorgesehen, in das ein Fernsehzuschauer einen eigenen, die momentane Fernsehsendung betreffenden oder beschreibenden Kommentar einspricht. Das Ausgangssignal des Mikrofons 8 gelangt an einen Sprachprozessor 5, welcher ebenso aufgebaut ist wie der im Zusammenhang mit Figur 1 erläuterte Sprachprozessor. Das Ausgangssignal des Sprachprozessors 5 wird einem Zeichengenerator 6 zugeführt und dort in Signale umgewandelt, welche sich zur Darstellung auf dem Bildschirm eignen. Diese Signale werden in einem Addierer 7 in das Ausgangssignal der Schaltung 1 zur Videosignalverarbeitung eingetastet. Das Ausgangssignal des Addierers 7 wird einem Videorecorder 9 zugeführt und mit diesem magnetisch aufgezeichnet. Dem Videorecorder 9 wird ferner das Ausgangssignal der Schaltung 3 zur Tonsignalverarbeitung zugeführt, welches beispielsweise in einer Längsspur am Bandrand des Magnetbandes aufgezeichnet wird.

Mittels der beschriebenen Einrichtung kann beispielsweise ein Familienmitglied eines Schwerhörigen eine Fernsehsendung mit einem eigenen Kommentar versehen, welcher bei der Wiedergabe der auf dem Magnetband des Videorecorders aufgezeichneten Fernsehsendung in Form von Untertiteln angezeigt wird, so daß dem Schwerhörigen das Verständnis der Fernsehsendung erleichtert wird.

Ferner kann mittels der beschriebenen Einrichtung auch eine fremdsprachige Fernsehsendung, beispielsweise beim Empfang von Satelliten-Fernsehsignalen, von einer die Fremdsprache beherrschenden Person entweder direkt oder in Kurzform in die Landessprache umgesetzt werden, so daß bei der Wiedergabe der aufgezeichneten Sendung einem der Fremdsprache unkundigen Betrachter eine Sprachinformation, die er versteht, in Form von Untertiteln angeboten wird.

Weiterhin kann die an die Eingänge $E_1$ und $E_2$ angelegte Bild- bzw. Toninformation auch von einem weiteren Videorecorder stammen, so daß mittels der beschriebenen Einrichtung eine Überspielung mit gleichzeitiger Untertitelung vorgenommen wird.

Selbstverständlich ist es beim Ausführungsbeispiel gemäß Figur 1 möglich, das Ausgangssignal des Addierers 7 magnetisch aufzuzeichnen. Auch kann beim Ausführungsbeispiel gemäß Figur 2 das Ausgangssignal des Addierers 7 auf dem Bildschirm dargestellt werden.

## Patentansprüche

1. Fernsehempfänger mit einer Einrichtung zur Untertitelung von Fernsehsignalen, welcher aufweist:
   - eine Schaltung zur Verarbeitung des Videosignals,
   - eine Schaltung zur Verarbeitung eines niederfrequenten Tonsignals,

- einen Bildschirm zur visuellen Darstellung des Videosignals,

**dadurch gekennzeichnet,** daß

- das niederfrequente Tonsignal die den Bildinhalt begleitende Toninformation ist,
- der Fernsehempfänger einen Schalter(S), einen Sprachprozessors (5), eine Zeichengenerator (6) und einen Addierer (7) aufweist, wobei:

  das niederfrequente Tonsignal über den Schalter (S) dem Sprachprozessor (5) zur Analyse des Tonsignals zugeführt wird,

  das Ausgangssignal des Sprachprozessors (5) dem Zeichengenerator (6) zugeführt wird,

  und das Ausgangssignal des Zeichengenerators (6) im Addierer (7) in das Videosignal eingetastet wird.

2. Fernsehempfänger mit einer Einrichtung zur Untertitelung von Fernsehsignalen, welcher aufweist:
   - eine Schaltung zur Verarbeitung des Videosignals,
   - eine Schaltung zur Verarbeitung eines niederfrequenten Tonsignals,
   - einen Bildschirm zur visuellen Darstellung des Videosignals,

   **gekennzeichnet durch**
   - ein Mikrofon (8) zur Umsetzung von Sprachsignalen in ein weiteres niederfrequentes Tonsignal,
   - einen Sprachprozessor (5) zur Analyse des weiteren niederfrequenten Tonsignals,
   - einen an den Ausgang des Sprachprozessors (5) angeschlossenen Zeichengenerator (6), und
   - einen Addierer (7) zur Eintastung des Ausgangssignals des Zeichengenerators (6) in das Videosignal.

3. Fernsehempfänger nach Anspruch 1 oder 2, **dadurch gekennzeichnet,** daß das Ausgangssignal des Addierers (7) auf dem Bildschirm wiedergegeben wird.

4. Fernsehempfänger nach Anspruch 1, 2 oder 3, **dadurch gekennzeichnet,** daß das Ausgangssignal des Addierers (7) magnetisch aufgezeichnet wird.

## Claims

1. Television receiver having a device for subtitling television signals, which has:
   - a circuit for processing the video signal,
   - a circuit for processing a low-frequency sound signal,
   - a screen for the visual representation of the video signal,

   characterised in that
   - the low-frequency sound signal is the sound information accompanying the picture contents,
   - the television receiver has a switch (S), a voice processor (5), a character generator (6) and an adder (7), in which: the low-frequency sound signal is fed via the switch (S) to the voice processor (5) for analysis of the sound signal; the output signal of the voice processor (5) is fed to the character generator (6); and the output signal of the character generator (6) is inserted into the video signal in the adder (7).

2. Television receiver having a device for subtitling television signals, which has:
   - a circuit for processing the video signal,
   - a circuit for processing a low-frequency sound signal,
   - a screen for the visual representation of the video signal,

   characterised by
   - a microphone (8) for converting voice signals into a further low-frequency sound signal,
   - a voice processor (5) for analysing the further low-frequency sound signal,
   - a character generator (6) connected to the output of the voice processor (5), and
   - an adder (7) for inserting the output signal of the character generator (6) into the video signal.

3. Television receiver according to Claim 1 or 2, characterised in that the output signal of the adder (7) is reproduced on the screen.

4. Television receiver according to Claim 1, 2 or 3, characterised in that the output signal of the adder (7) is magnetically recorded.

## Revendications

1. Récepteur de télévision comportant un dispositif pour le sous-titrage de signaux de télévision et qui comprend :
   - un circuit pour traiter le signal vidéo,
   - un circuit pour traiter un signal son à basse fréquence,

- un écran pour représenter optiquement le signal vidéo,

caractérisé en ce que

- le signal son à basse fréquence est l'information acoustique accompagnant le contenu de l'image,
- le récepteur de télévision contient un interrupteur (S), un processeur de signaux vocaux (5), un générateur de caractères (6) et un additionneur (7), le signal son à basse fréquence étant envoyé par l'intermédiaire de l'interrupteur (S) au processeur de signaux vocaux (5) pour l'analyse du signal acoustique, le signal de sortie du processeur de signaux vocaux (5) est envoyé au générateur de caractères (6), et le signal de sortie du générateur de caractères (6) est introduit dans le signal vidéo, dans l'additionneur (7).

2.  Récepteur de télévision comportant un dispositif pour le sous-titrage de signaux de télévision, qui comprend :

- un circuit pour traiter le signal vidéo,
- un circuit pour traiter un signal son à basse fréquence,
- un écran pour représenter optiquement le signal vidéo,

caractérisé par

- un microphone (8) pour convertir des signaux vocaux en un autre signal son à basse fréquence,
- un processeur de signaux vocaux (5) pour analyser l'autre signal son à basse fréquence,
- un générateur de caractères (6) raccordé à la sortie du processeur de signaux vocaux (6), et
- un additionneur (7) pour produire le signal de sortie du générateur de caractères (6) dans le signal vidéo.

3.  Récepteur de télévision selon la revendication 1 ou 2, caractérisé en ce que le signal de sortie de l'additionneur (7) est reproduit sur l'écran.

4.  Récepteur de télévision selon la revendication 1, 2 ou 3, caractérisé en ce que le signal de sortie de l'additionneur (7) est enregistré magnétiquement.

FIGUR 1

E2 → **Tonverarb.** 3 → 4

EIN/AUS → S

**Sprachproz.** 5

**Zeichengen.** 6

E1 → **Videoverarb.** 1 → + 7 → ▷ → 2

FIGUR 2

E2 → **Tonverarb.** 3 → 4

E1 → **Videoverarb.** 1 → ▷ 10 → 2

8 → **Sprachproz.** 5 → **Zeichengen.** 6 → + 7 → 9